**Europäisches Patentamt**

**European Patent Office**

**Office européen des brevets**

(19)

(11) Numéro de publication : **0 520 874 A1**

## (12) DEMANDE DE BREVET EUROPEEN

(21) Numéro de dépôt : **92401749.4**

(22) Date de dépôt : **23.06.92**

(51) Int. Cl.$^5$ : **B60G 3/02,** B60G 7/00, B60G 11/04, F16F 1/22

(30) Priorité : **25.06.91 FR 9107777**

(43) Date de publication de la demande : **30.12.92 Bulletin 92/53**

(84) Etats contractants désignés : **DE ES GB IT**

(71) Demandeur : **REGIE NATIONALE DES USINES RENAULT S.A.**
**34, Quai du Point du Jour**
**F-92109 Boulogne Billancourt (FR)**

(72) Inventeur : **Roussel, Eric**
**42, rue du Stade**
**F-78340 Les Clayes Sous Bois (FR)**
Inventeur : **Engramer, Jackie**
**28, rue de la Ferronnerie**
**F-78370 Plaisir (FR)**

(74) Mandataire : **Ernst-Schonberg, Michel et al**
**REGIE NATIONALE DES USINES RENAULT SA, Sce 0267, 860, quai de Stalingrad**
**F-92109 Boulogne Billancourt Cédex (FR)**

(54) **Train arrière pour véhicule routier.**

(57)  Véhicule routier, notamment véhicule dit utilitaire, équipé d'un train arrière à roues indépendantes avec suspension du type à lames-ressorts (11, 12) à extension longitudinale articulés à leurs extrémités avant et arrière à des poutrelles transversales de caisse de véhicule avant (4) et arrière (3) soit directement en (13) et (14), soit par jeu de biellettes (17-18, 19-20), caractérisé par l'adjonction de bras obliques (26, 27) articulés (en 7, 8) d'une part en une zone centrale de la poutrelle avant (4) de caisse et fixés d'autre part fermement en une zone intermédiaire des lames-ressorts (11, 12) au voisinage immédiat des porte-essieux de roue (31, 37).

Un tel véhicule est de réalisation moins onéreuse et plus simple, tout en autorisant un abaissement satisfaisant du plancher de caisse de véhicule.

FIG.:1

EP 0 520 874 A1

La présente invention concerne un véhicule routier du genre équipé d'un train arrière à roues indépendantes. Lorsqu'on équipe un véhicule routier, et plus particulièrement un véhicule utilitaire, d'un tel train arrière, on agence généralement des lames-ressorts à extension longitudinales articulées à leurs extrémités avant et arrière à des poutrelles transversales de caisse de véhicule, avec fixation en partie centrale de chaque lame-ressort d'un porte-essieu de roue. Ce type de suspension, s'il présente des avantages certains de faible coût, de simplicité de construction, et permet d'assurer une capacité de chargement importante, présente cependant divers inconvénients et notamment :

- Hauteur de plancher importante liée au débattement vertical de l'essieu (l'essieu transversal présente le même débattement vertical que la fusée) ; dans le cas d'un pont arrière rigide, cet aspect est accentué du fait du volume requis pour le mécanisme de transmission à différentiel.
- Prise de carrossage de la roue par rapport à la caisse lors de dévers importants du véhicule ; cet aspect implique des passages de roue volumineux qui limitent localement la largeur utile de chargement.
- Comportement routier et confort limités du fait de la rusticité du système. La présence d'un pont arrière rigide (masse non suspendue importante), accroît encore ces phénomènes.
- Bruyance de pignonerie pour les ponts arrière rigides résultant d'une transmission vibratoire à la caisse par les lames de suspension.

On a bien proposé et on utilise couramment dans les véhicules à transport de personnes, une suspension du type à triangle dit "tiré", qui est articulé selon l'un de ses côtés autour d'un axe transversal du véhicule et qui reçoit, au voisinage d'un sommet opposé audit côté articulé, un porte-essieu de roue, avec interposition d'un ressort de compression entre triangle de suspension et caisse de véhicule. Un tel système de suspension est cependant assez onéreux, car il nécessite de réaliser par forgeage ou moulage une pièce très robuste, donc massive. Outre cet inconvénient, un tel système est tout à fait inapproprié aux véhicules utilitaires, car le ressort de compression ne permet pas de surbaisser la caisse du véhicule. De plus ce type de suspension, assez onéreux, est peu utilisé sur véhicule utilitaire.

L'invention a pour buts un véhicule routier, notamment un véhicule dit utilitaire, équipé d'une suspension simple et peu coûteuse, robuste, tout en autorisant la mise en oeuvre de caisses surbaissées, et ces objectifs de l'invention sont atteints, dans un train arrière à roues indépendantes avec suspension du type à lames-ressorts à extension longitudinale, par l'adjonction de bras obliques articulés d'une part sur une zone centrale d'une poutrelle transversale avant de caisse et fixés d'autre part fermement en une zone intermédiaire des lames-ressorts au voisinage immédiat des porte-essieux de roue.

De la sorte on réalise un type de suspension à flexibilité plus limitée essentiellement due à la partie arrière des lames-ressorts, alors que les chocs importants sont pris en compte éventuellement sur l'ensemble bras articulé et partie avant des lames-ressorts.

Selon une forme avantageuse de mise en oeuvre, chaque lame-ressort présente une rigidité accrue dans sa partie antérieure, au moins entre son articulation avant et sa fixation au bras articulé. Ainsi, on peut adapter les effets de "pince" et de "carrossage" lors du débattement de roue à la flexibilité de lame longitudinalement différenciée. En effet la prise de carrossage est alors proportionnelle à la déflexion de la partie avant des lames-ressorts sous un effort vertical de roue et elle correspond à une rotation du bras articulé autour de son axe avant.

La prise de "pince" est consécutive à la variation de corde de la partie antérieure de lame-ressort, ceci pour une lame qui, au repos, est plate ou en légère contre-flèche.

Il résulte de cette brève analyse que le véhicule présente une nette amélioration dans son comportement routier, permet une diminution de la prise de carrossage de la roue par rapport à la caisse par comparaison aux trains classiques de véhicules utilitaires, offre la possibilité d'accroître la largeur entre passages de roues, donc le volume utile de chargement, et comme le débattement du bras articulé se situe au niveau des longerons du véhicule inférieur au porte-essieu de roue, l'abaissement du plancher arrière de caisse peut être accentué. En cas de propulsion arrière, on peut assurer une suspension, avec filtration acoustique correcte, du pont de transmission motrice. De plus le système de suspension selon l'invention est peu onéreux du fait de sa simplicité de conception et de réalisation.

L'invention concerne également des lames-ressorts caractérisées par une rigidité plus élevée dans une partie terminale de son extension longitudinale. Cette rigidité accrue peut être obtenue par le fait que la lame présente sur une partie de son extension longitudinale des bords latéraux de rigidification, ou bien qu'elle est doublée d'une sous-lame de rigidification, ou bien encore qu'elle est formée d'une lame principale recourbée au moins en partie sur elle-même en formant un oeil d'articulation périphériquement fermé.

Les caractéristiques et avantages de l'invention ressortiront d'ailleurs de la description qui suit, à titre d'exemple, en référence aux dessins annexés, dans lesquels :

La figure 1 est une vue en perspective du châssis arrière.

Les figures 2 et 3 sont des vues en élévation et de dessus respectivement d'une variante de réalisation de suspension.

La figure 4 est une vue en perspective d'une autre variante de réalisation.

Les figures 5 et 6 sont des vues de dessus et en élévation montrant la déformation d'une suspension subissant un choc dans le sens vertical.

Les figures 7, 8 et 9 sont des vues en perspective de trois variantes de réalisation d'une lame-ressort utilisée dans une suspension conforme à l'invention.

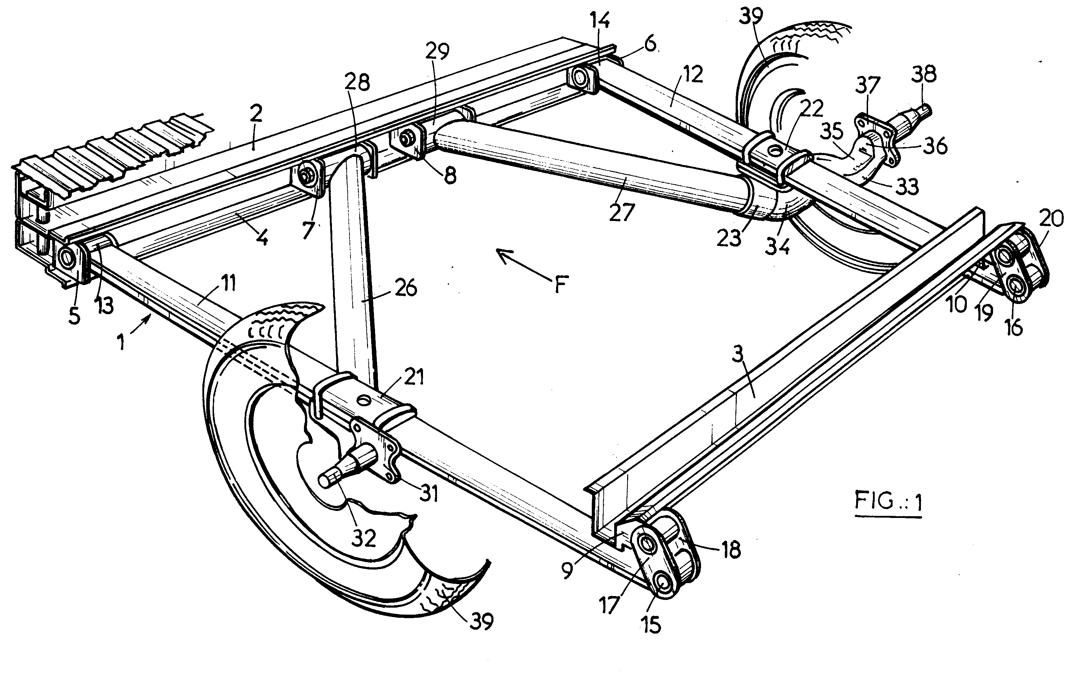

En se référant à la figure 1, un châssis 1 de véhicule comprend deux poutrelles transversales, l'une avant 2, l'autre arrière 3, selon le sens d'avance du véhicule indiqué par la flèche F.

La poutrelle avant 2 est doublée par une poutrelle de renfort 4 en forme de U s'ouvrant vers l'arrière, et dans laquelle sont soudées deux chapes d'extrémité latérale 5 et 6 et deux chapes centrales 7 et 8.

La poutrelle arrière 3 présente deux chapes d'extrémité 9 et 10 s'ouvrant vers l'arrière du véhicule.

Les chapes d'extrémité alignées longitudinalement 5 et 9 d'une part, 6 et 10 d'autre part, servent à la fixation articulée des extrémités, ou oeils, avant 13, 14 de deux lames-ressorts longitudinales 11 et 12, dont les extrémités arrière ou oeils 15-16 sont articulées à un jeu de deux biellettes 17-18, 19-20 respectivement, elles-mêmes articulées dans les chapes 9 et 10.

Dans une zone centrale, chaque lame-ressort 11, 12 est associée à une pièce massive 21 sur laquelle elle est fixée par montage à étrier 22 et qui présente une portée présentant un passage cylindrique tel que 23 pour la réception de l'extrémité d'un bras 26, 27, dont l'autre extrémité est soudée à un tourillon 28, 29 respectivement, qui est articulé dans la chape médiane 7, 8 respectivement de la poutrelle avant 4.

Les différentes articulations des lames 11-12 et biellettes 17-18 et 19-20 aux poutres 2 et 3 et des lames 11-12 aux deux jeux de biellettes 17-18 et 19-20, ainsi que des bras 26-27 aux chapes 7, 8, sont du type à axes transversaux, parallèles aux poutrelles 2 et 3, avec cependant interposition entre axe transversal et tourillon récepteur d'axe d'un manchon en matériau souple autorisant un léger débattement angulaire autour d'un axe transversal.

Si l'on se réfère à l'équipement gauche du véhicule, selon le sens d'avance, on voit que la pièce massive 21 supporte une pièce 31 avec porte-essieu 32 à la périphérie extérieure de la pièce 21 pour la réception d'une roue 39. Le bras articulé 26 est ici encastré par son extrémité arrière dans un manchon-récepteur - non visible à la figure 1 - soudé dans l'orientation désirée en dessous de la pièce massive 21.

Si l'on se réfère plus particulièrement à la partie droite du véhicule, selon le sens d'avance, on voit que la pièce à étrier 22 est ici solidement ancrée sur une pièce massive 33 présentant un méplat central pour la réception de la lame 12 et une extension intérieure 34 avec dégagement cylindrique 23 dans la direction du bras articulé 27, et une extension latérale vers l'extérieur 35 avec un bord de relèvement 36 pour la fixation par boulonnage d'un porte-essieu 37, dont un axe 38 reçoit une roue 39.

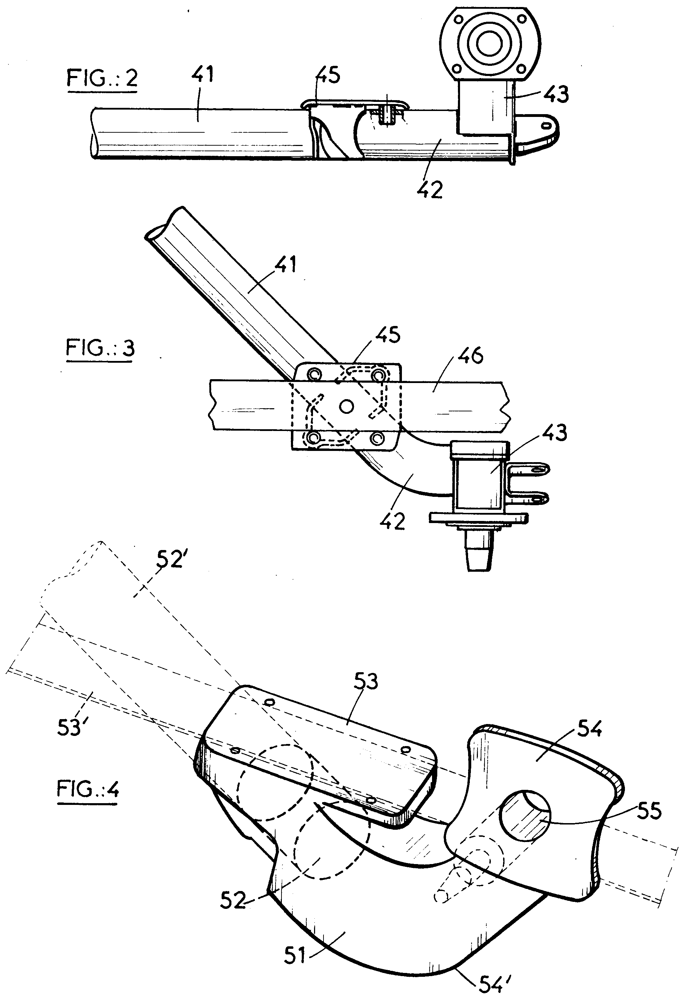

En se référant aux figures 2 et 3, on voit qu'un bras tubulaire articulé 41 situé côté gauche du véhicule, présente une partie arrière 42 recourbée dans le sens longitudinal du véhicule, sur l'extrémité de laquelle est soudé un porte-essieu 43, alors qu'une plaque rapportée 45 sert à la réception d'une lame-ressort longitudinale 46, toujours fixée par montage à étrier sur la plaque 45.

En se référant à la figure 4, on voit qu'une seule et même pièce massive 51, venue de moulage, présente trois parties, dont une, en forme de dégagement cylindrique 52, sert à la réception de l'extrémité d'un bras articulé 52', dont l'autre, en forme de méplat 53, forme platine de bridage par étrier boulonné pour une lame-ressort 53', et dont une troisième 54, en forme de plaque perpendiculaire au méplat 53 et percée d'un orifice transversal 55, sert à la fixation d'un porte-essieu 54'.

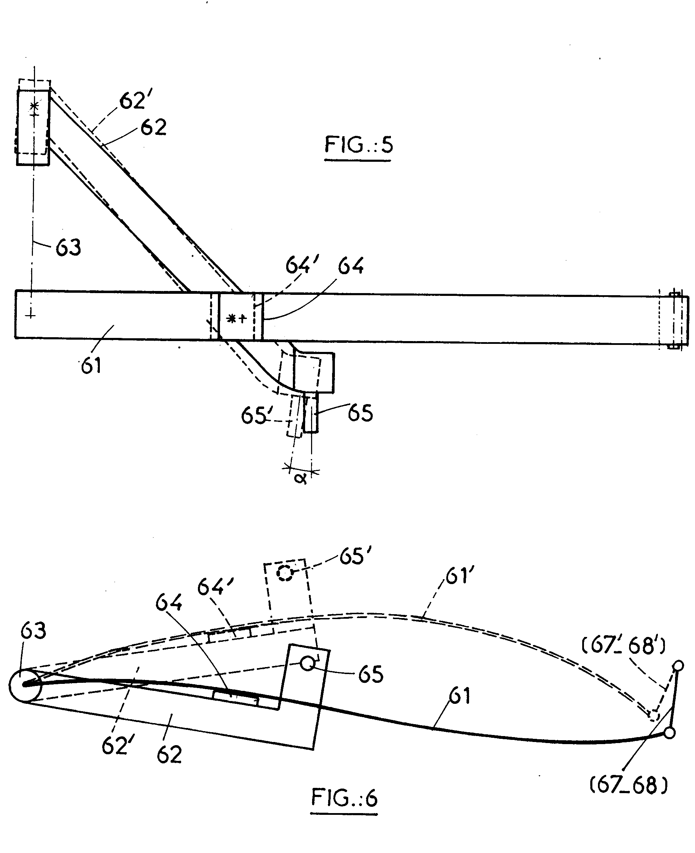

Selon les figures 5 et 6, qui reprennent une des positions du type décrit à la figure 3, avec une lame 61 et un bras 62 articulés à l'avant selon la direction transversale 63, liés rigidement entre eux en 64, avec un porte-essieu 65, et avec la lame 61 articulée à l'arrière à un jeu de biellettes 67-68, on voit, figure 6, la déformation de l'ensemble suspensif en cas d'un choc vers le haut dont l'effet est représenté par le déplacement du porte-essieu 65 en position 65', les mêmes éléments de la suspension dans cette position de flexion de lame 61 (en 61') étant désignés par les mêmes chiffres de référence affectés d'un indice.

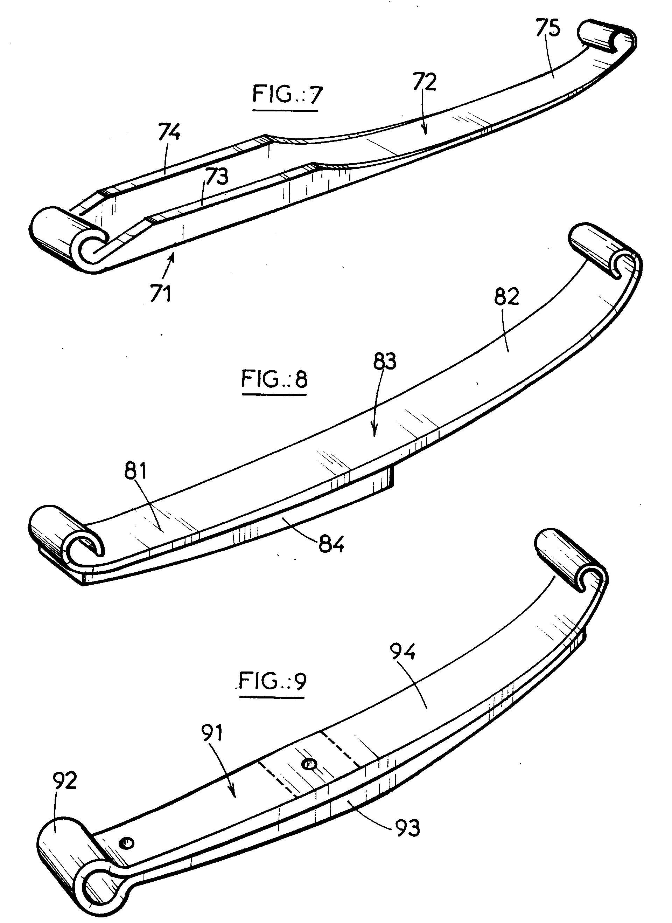

En se référant à la figure 7, on voit que la partie avant 71 d'une lame-ressort 72, dans une suspension d'un des types décrits plus haut, présente une partie latérale à bords relevés 73 et 74, ce qui accroît considérablement la rigidité de cette partie antérieure 71 par rapport à la partie restante 75 de la lame 72.

En se référant à la figure 8, on voit que cet effet recherché de rigidité accrue d'une partie antérieure 81 par rapport à une partie arrière plus flexible 82 d'une lame 83 est obtenu par l'agencement d'une seconde lame nettement plus courte à l'avant 84 qui lui est fixée par soudage ou par étrier.

En se référant à la figure 9, une lame-ressort 91 est formée d'une seule pièce recourbée à l'extrémité avant pour former l'oeil d'articulation 92 et d'un prolongement inférieur 93 fixé à la partie principale de lame 94 par l'étrier central. Ici également on accroît l'effet de rigidité de la partie avant de lame 91.

## Revendications

1. Véhicule routier, notamment véhicule dit utilitaire, équipé d'un train arrière à roues indépendantes avec suspension du type à lames-ressorts (11, 12, 46, 52', 61, 72, 83, 91) à extension longitudinale articulées à leurs extrémités avant et arrière à des poutrelles transversales de caisse de véhicule avant (4) et arrière (3) soit directement en (13) et (14), soit par jeu de biellettes (17-18, 19-20), avec bras obliques (26, 27, 41, 52', 62) articulés (en 7, 8) d'une part en une zone centrale de la poutrelle de caisse et fixés d'autre part fermement en une zone intermédiaire des lames-ressorts (11, 12, 46, 52', 61, 72, 83, 91) au voisinage immédiat des porte-essieux de roue (31, 37, 43, 54, 65), caractérisé en ce que chaque roue (39) est associée à un bras unique (26, 27, 41, 52', 62) articulé à une poutrelle avant (4) autour d'un axe transversal (28, 29).

2. Véhicule routier selon la revendication 1, caractérisé en ce que la lame-ressort (46, 61) est fixée par étrier sur le bras-support (41, 62).

3. Véhicule routier selon la revendication 1, caractérisé en ce que le porte-essieu (43, 65) est fixé sur une extension recourbée dans la direction longitudinale, telle (42) du bras oblique (41, 62).

4. Véhicule routier selon la revendication 1, caractérisé en ce que le porte-essieu (31) est fixé sur une pièce de solidarisation à étrier (21) de la lame-ressort (11) sur le bras (26).

5. Véhicule routier selon la revendication 1, caractérisé en ce que le bras oblique (27, 52') est engagé dans un trou (23, 52) d'une pièce massive de liaison (34, 51) entre bras, lame-ressort et porte-essieu, ladite pièce (34, 51) présentant en outre un méplat tel (53) pour la fixation à étrier de la lame (12, 53') et une extension telle (35) de montage d'un essieu tel (38).

6. Véhicule routier selon la revendication 5, caractérisé en ce que l'essieu (38) est monté sur un porte-essieu (37) boulonné sur une paroi (36) de la pièce de liaison (34).

7. Véhicule routier selon la revendication 5, caractérisé en ce que l'essieu est monté sur un porte-essieu formé par une paroi (54) à orifice (55) élaborée d'un seul tenant avec la pièce massive de liaison (51).

8. Véhicule routier selon une quelconque des revendications 1 à 7, caractérisé en ce que la lame-ressort (72, 82, 91) présente une rigidité accrue dans sa partie antérieure.

9. Véhicule routier selon la revendication 8, caractérisé en ce que la lame-ressort (72) présente, sur une partie antérieure de son extension longitudinale, des bords latéraux relevés de rigidification (73, 74).

10. Véhicule routier selon la revendication 8, caractérisé en ce que la lame flexible (83) est doublée dans une partie (81) d'une sous-lame de rigidification (84).

11. Véhicule routier selon la revendication 8, caractérisé en ce que la lame (91) est formée d'une lame principale recourbée au moins en partie sur elle-même en (93) en formant un oeil d'articulation périphériquement fermé (92).

12. Train arrière pour véhicule routier comprenant les caractéristiques décrites dans l'une quelconque des revendications 1 à 11.

FIG.: 1

EP 0 520 874 A1

FIG.: 2

41

45

43

42

FIG.: 3

41

45

46

43

42

FIG.:4

52'

53'

53

52

51

54

55

54'

FIG.:5

FIG.:6

FIG.:7

74

73

72

75

71

FIG.:8

83

82

81

84

FIG.:9

94

91

92

93

**Office européen des brevets**

## RAPPORT DE RECHERCHE EUROPEENNE

Numero de la demande

EP 92 40 1749
Page 1

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-4 061 363 (SYMONS C.B.) <br> * abrégé; figures * <br> --- | 1,2 | B60G3/02 <br> B60G7/00 <br> B60G11/04 <br> F16F1/22 |
| Y | US-A-2 300 169 (PERKINS S.B.) <br> * colonne de droite, ligne 26 - ligne 32; figures * <br> --- | 1,2 | |
| A | US-A-2 085 662 (JOHNSON V.A.) <br> * figures 1,2 * <br> --- | 1 | |
| A | FR-A-1 302 012 (STERCKEMAN A.) <br> * page 1, colonne de gauche, alinéa 4 - page 2, colonne de gauche, alinéa 5; figures 1-3 * <br> --- | 1,2,4 | |
| A | US-A-2 117 401 (COBB V.L.) <br> * figures * <br> --- | 1,2 | |
| A | US-A-2 072 198 (DAVIS W.E.) <br> * figures * <br> --- | 2,4,5 | |
| A | US-A-4 429 900 (FEHER J.S.) <br> * abrégé; figures 1,3,4 * <br> --- | 1,3,5 | **DOMAINES TECHNIQUES RECHERCHES (Int. Cl.5)** <br><br> B60G <br> F16F |
| A | US-A-3 591 163 (ANDERSON R.D.) <br> * colonne 2, ligne 1 - ligne 46; figures 1,2,3 * <br> --- | 1,8-10 | |
| A | GB-A-184 275 (FAIRBANKS R.N.) <br> * figures 1,2 * <br> --- | 1,5,6 | |
| A | WO-A-8 600 266 (GKN TECHNOLOGY) <br> * page 6, ligne 15 - page 7, ligne 10; figures 1-3 * <br> --- | 1,5,8 | |
| | -/-- | | |

Le présent rapport a été établi pour toutes les revendications

| Lieu de la recherche | Date d'achèvement de la recherche | Examinateur |
|---|---|---|
| LA HAYE | 18 SEPTEMBRE 1992 | TSITSILONIS L. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

Office européen
des brevets

# RAPPORT DE RECHERCHE EUROPEENNE

Numero de la demande

EP    92 40 1749
Page 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | PATENT ABSTRACTS OF JAPAN<br>vol. 2, no. 119 (M-78)(3757) 4 Octobre 1978<br>& JP-A-53 087 424 ( TOYOTA JIDOSHA ) 8 Janvier 1978<br>* abrégé * | 1,8 | |
| | ----- | | |
| | | | **DOMAINES TECHNIQUES RECHERCHES (Int. Cl.5)** |

Le présent rapport a été établi pour toutes les revendications

| Lieu de la recherche | Date d'achèvement de la recherche | Examinateur |
|---|---|---|
| LA HAYE | 18 SEPTEMBRE 1992 | TSITSILONIS L. |

EPO FORM 1503 03.82 (P0402)